# NEUE EUROPÄISCHE PATENTSCHRIFT

(11) **EP 2 486 288 B2**
(45) Veröffentlichungstag und Bekanntmachung des Hinweises auf die Entscheidung über den Einspruch: **23.01.2019**
(45) Hinweis auf die Patenterteilung: 13.01.2016
(21) Anmeldenummer: 10765581.3
(22) Anmeldetag: 06.10.2010
(51) Int. Cl.: F16B 19/00

(54) **VERBINDUNG ZWISCHEN ZWEI BAUTEILEN AUS VERSTÄRKTEM KUNSTSTOFF UND VERFAHREN ZU IHRER HERSTELLUNG**
CONNECTION BETWEEN TWO COMPONENTS MADE OF REINFORCED PLASTIC AND METHOD FOR THE PRODUCTION THEREOF
LIAISON ENTRE DEUX ÉLÉMENTS EN PLASTIQUE RENFORCÉ ET SON PROCÉDÉ DE FABRICATION

(30) Priorität: 06.10.2009 DE 102009048398
(43) Veröffentlichungstag der Anmeldung: 15.08.2012
(73) Patentinhaber: Böllhoff Verbindungstechnik GmbH, 33649 Bielefeld (DE); Audi AG, 85045 Ingolstadt (DE)
(72) Erfinder: RINTELMANN, Jochen, 06844 Dessau-Rosslau (DE); STUMPF, Michael, 33611 Bielefeld (DE); BÄR, Carsten, 85049 Ingolstadt (DE); STEINIG, Marc, 33184 Altenbeken (DE); DRAHT, Torsten, 33758 Schloss Holte (DE)
(74) Vertreter: Heyer, Volker
(86) Internationale Anmeldenummer: PCT/EP2010/006109
(87) Internationale Veröffentlichungsnummer: WO 2011/042176

(56) Entgegenhaltungen:
- WO-A2-2009/010165
- DE-A1- 3 016 499
- JP-A- 2005 069 451

## Beschreibung

### 1. Gebiet der Erfindung

Die vorliegende Erfindung betrifft Verbindungen von Bauteilen mit Hilfe eines selbstlochenden Verbindungselements, von denen mindestens ein Bauteil aus verstärktem Kunststoff besteht. Des Weiteren betrifft die vorliegende Erfindung ein Verfahren zur Herstellung derartiger Verbindungen.

### 2. Hintergrund der Erfindung

Im Stand der Technik sind verschiedene Verfahren und Verbindungen bekannt, die beispielsweise zwei Bauteile aus verstärktem Kunststoff mittels gewindelosem Befestigungselement miteinander verbinden. Derartige Verbindungen werden im Flugzeugbau und zunehmend im Fahrzeugbau eingesetzt. Die Bauteile bestehen dabei beispielsweise aus glasfaser- oder kohlefaserverstärktem Kunststoff. Ein Beispiel aus dem Flugzeugbau ist in US 6,499,926 beschrieben.

Im Flugzeugbau werden die beiden Bauteile, die aus kohlefaserverstärktem Kunststoff (CFK) bestehen, zunächst vorgebohrt. Ein für das Material schonendes aber aufwändiges Verfahren ist das Wasserstrahlbohren. Zum Verbinden beider Bauteile müssen die Löcher dann übereinander ausgerichtet und die Bauteile gegeneinander vorgespannt werden, um ein Verrutschen beim Herstellen der Verbindung zu vermeiden. Danach wird ein Blindniet oder ein ähnliches Verbindungselement in die Löcher gesteckt und nachfolgend befestigt. Bei der Bildung des Schließkopfes an dem verbindenden Blindniet entstehen mechanische Spannungen an der Grenzfläche zwischen Bauteil und Blindniet. Diese mechanischen Spannungen erzeugen Risse und unterstützen deren Wachstum, dass sie im starren Kunststoffbauteil nicht Relaxieren können. Des Weiteren wird der Aufwand zur Herstellung der Verbindung dadurch gesteigert, dass der Blindniet nass, d. h. eingebettet in Klebstoff, oder mit Hülse verbaut wird. Auf diese Weise soll die Korrosion an der Lochgrenze zum Verbindungselement reduziert werden.

DE 20 2005 015 713 U beschreibt einen hohlen, selbststanzenden Befestiger, der in nur ein Kunststoffbauteil eingebracht wird. Nach dem Stanzvorgang wird der überstehende Rand des Befestigers umbördelt, um ihn am Bauteil festzulegen. Da das Umbördeln mit einer radialen Aufweitung des Befestigers bezogen auf seine Längsachse verbunden ist, werden rissbildende mechanische Spannungen im Bauteil erzeugt. In Abhängigkeit vom Grad der Aufweitung des Befestigers wirken diese rissbildenden Spannungen auch im Inneren des Bauteils, d. h. in seiner Dickenrichtung, sodass auch dort Risse erzeugt werden können.

JP 2005-069451-A beschreibt ein selbstlochendes Verbindungselement 5, dass sowohl ein erstes 1 als auch ein zweites Bauteil 2 durchdringt. Die ringförmige Spitze 9 des Verbindungselements 5 dringt in die metallische Platte 4 ein, um den Durchmesser des Verbindungselements 5 zu vergrößern. Allerdings durchdringt die ringförmige Spitze 9 des Verbindungselements 5 die Metallplatte 4 nicht.

Ausgehend von dem oben diskutiertem Stand der Technik ist es daher die Aufgabe vorliegender Erfindung, eine wirtschaftliche und verlässliche Verbindung zwischen Bauteilen aus verstärktem Kunststoff sowie ein Verfahren zu ihrer Herstellung bereitzustellen.

### 3. Zusammenfassung der Erfindung

Die oben genannte Aufgabe wird durch eine Verbindung bestehend aus mindestens zwei Bauteilen gemäß dem unabhängigen Patentanspruch 1 sowie durch ein Verfahren zum Verbinden von mindestens einem ersten Bauteil und einem zweiten nicht-vorgelochten Bauteil aus verstärktem Kunststoff durch ein selbstlochendes Verbindungselement mit einem Kopf und einem Schaft gemäß dem unabhängigen Patentanspruch 9 gelöst. Vorteilhafte Ausgestaltungen und Weiterentwicklungen vorliegender Erfindung gehen aus der folgenden Beschreibung, den gleitenden Zeichnungen sowie den abhängigen Ansprüchen hervor.

Die erfindungsgemäße Verbindung bestehend aus mindestens zwei Bauteilen weist die folgenden Merkmale auf: ein erstes Bauteil und ein zweites Bauteil, von denen zumindest das zweite Bauteil aus verstärktem Kunststoff besteht, ein selbstlochendes Verbindungselement mit einem Kopf und einem Schaft, dessen Kopf sich am ersten Bauteil abstützt und dessen Schaft das erste und das zweite Bauteil vollständig durchläuft, und ein scheibenförmiges Gegenlager an dem der Schaft befestigt ist, sodass die mindestens zwei Bauteile zwischen Kopf und Gegenlager fixiert sind.

Derartige Verbindungen werden bevorzugt in Bauteilen erzeugt, von denen das erste oder mehrere Bauteile aus verstärktem Kunststoff mit einer Festigkeit von über 300 MPa, vorzugsweise über 600 MPa, bestehen. Beispiele für derartige verstärkte Kunststoffe sind glasfaser-, kohlefaser-, gewebe- oder mattenverstärkte Kunststoffe, um nur einige Beispiele zu nennen. Es ist ebenfalls denkbar, dass weitere Kunststoffe anderer Materialgestaltung genutzt werden, die die oben genannten Festigkeitsbereiche erreichen. Derzeit bevorzugt ist die Verwendung von kohlefaserverstärktem Kunststoff (CFK) als Bauteilwerkstoff.

Zum Herstellen der Verbindung wird das selbstlochende Verbindungselement mit Kopf und Schaft in das erste und zweite Bauteil eingebracht. Um die beiden Bauteile verlässlich miteinander zu verbinden, ist der Schaft des Verbindungselements, der die zu verbindenden Bauteile vollständig durchdringt, an dem scheibenförmigen Gegenlager verankert. Aufgrund dieser Konstruktion werden die Bauteile zwischen Kopf des Verbindungselements und scheibenförmigem Gegenlager kraft- und formschlüssig gehalten. Das scheibenförmige Gegenlager sorgt ebenfalls dafür, dass die in axialer Richtung des Schafts wirkenden Zugkräfte über die Fläche des Gegenlagers verteilt und dann in das angrenzende zweite Bauteil eingeleitet werden. Dies reduziert Spannungskonzentrationen angrenzend an den Schaft des Verbindungselements.

Es ist bevorzugt, dass das zweite Bauteil oder das erste und das zweite Bauteil aus kohlefaserverstärktem Kunststoff bestehen. Gemäß vorliegender Erfindung sind das zweite oder das erste und zweite Bauteil für den Schaft des Verbindungselements nicht-vorgelochte Bauteile.

Vorliegende Verbindung wird in zumindest einem Bauteil aus verstärktem Kunststoff erzeugt, das für den Schaft des Verbindungselements nicht vorgelocht ist. Während der Herstellung der Verbindung erzeugt sich das Verbindungselement selbst das Loch zumindest im zweiten Bauteil, vorzugsweise durch einen selbstschneidenden oder stanzenden oder verdrängend-durchdringenden Prozess. Dies vereinfacht die Herstellung der Verbindung und macht die vorliegende Verbindung wirtschaftlicher im Vergleich zum Stand der Technik. Zudem ist es nicht erforderlich, die Innenflächen einer Bohrung im Bauteil nachzuarbeiten, beispielsweise durch Polieren, das Rissbildung oder eventuelle Korrosion reduziert wird.

Gemäß einer weiteren bevorzugten Ausgestaltung vorliegender Erfindung ist das scheibenförmige Gegenlager eine Scheibe aus duktilem Material mit oder ohne Loch zur Aufnahme des Schafts des Verbindungselements. In Abhängigkeit davon, wie das selbstlochende Verbindungselement konstruiert ist, wird eine Scheibe mit oder ohne Loch in der Verbindung genutzt. Das scheibenförmige Gegenlager erfüllt die Funktion einer verlorenen Matrize bei Herstellung der Verbindung, da sie während der Herstellung der Verbindung und in der vorliegenden Verbindung der Abstützung und mechanischen Spannungsverteilung im an dem Gegenlager anliegenden zweiten Bauteil dient. Wird ein Gegenlager mit Loch verwendet, ist das Loch unterhalb des Schafts angeordnet und der Umfang des Lochs oder sein Durchmesser auf den Umfang oder Durchmesser des Schafts des Verbindungselements abgestimmt. Es ist ebenfalls denkbar, dass der Schaft das Loch im Gegenlager während der Herstellung der Verbindung derart vergrößert, dass es passgenau im Verhältnis zum Schaft des Verbindungselementes vorliegt. In gleicher Weise ist es jedoch ebenfalls bevorzugt, dass der Schaft des Verbindungselements das Gegenlager während der Herstellung der Verbindung vollständig durchdringt und auf diese Weise oder nachfolgend am Gegenlager fixiert wird.

Gemäß einer weiteren Ausgestaltung vorliegender Erfindung liegt das scheibenförmige Gegenlager mit einer Fläche am zweiten Bauteil an, die in Form und flächigen Ausdehnung dem Kopf des Verbindungselements entspricht. Ist das Verbindungselement beispielsweise mit einem runden Kopf eines bestimmten Umfangs ausgestattet, so wird vorzugsweise ein scheibenförmiges Gegenlager mit ebenfalls einer runden Form und annähernd dem gleichen Umfang oder Durchmesser wie dem des Kopfes des Verbindungselements genutzt. Sind Kopf und Gegenlager einander gegenüberliegend angeordnet, sorgt dies für eine verbesserte Klemmung der miteinander zu verbindenden Bauteile zwischen Kopf und Gegenlager. Des Weiteren werden die mechanischen Klemmspannungen zwischen Kopf und Gegenlager gleichmäßig in die zu verbindenden Bauteile eingeleitet. Es ist ebenfalls denkbar, Kopf und Gegenlager in Größe und Form unterschiedlich auszubilden.

Gemäß einer weiteren bevorzugten Ausführungsform vorliegender Verbindung besteht das erste und zweite Bauteil aus nicht-vorgelochtem kohlefaserverstärktem Kunststoff (CFK) und der Schaft des Verbindungselements ist in axialer Richtung zumindest teilweise hohl und am Gegenlager radial auswärts bezogen auf die Längsachse des Schafts aufgeweitet, insbesondere umbördelt.

Zudem ist es bevorzugt, dass das selbstlochende Verbindungselement einen zumindest teilweise hohlen Schaft mit einer umfänglich angeordneten Schneidkante an der kopfabgewandten Stirnseite aufweist oder ein Vollstanzniet ist oder ein Bolzen mit an der kopf-abgewandten Stirnseite spitz zulaufendem Schaft ist.

Vorliegende Erfindung umfasst zudem ein Verfahren zum Verbinden von mindestens einem ersten Bauteil und einem zweiten nicht-vorgelochten Bauteil, das aus verstärktem Kunststoff besteht, durch ein selbstlochendes Verbindungselement mit einem Kopf und einem Schaft. Dieses Verfahren weist die folgenden Schritte auf: a) Anordnen des ersten und zweiten Bauteils übereinander, b) Vorspannen des ersten und zweiten Bauteils gegen ein scheibenförmiges Gegenlager, c) Setzen des Verbindungselements derart, dass der Schaft das erste und zweite Bauteil sowie das scheibenförmige Gegenlager vollständig durchdringt, wobei das scheibenförmige Gegenlager als Matrize wirkt, und d) Fixieren des Schafts am Gegenlager, sodass das erste und zweite Bauteil zwischen dem Kopf des Verbindungselements und Gegenlager gehalten sind.

Gemäß einer bevorzugten Ausführungsform des Verfahrens bestehen das erste und zweite Bauteil aus nicht-vorgelochtem kohlefaserverstärktem Kunststoff. Das selbstlochende Verbindungselement weist einen zumindest teilweise hohlen Schaft mit einer umfänglich angeordneten Schneidkante an der kopfabgewandten Stirnseite auf. In weiterer Ausgestaltung von Schritt c) des oben beschriebenen Verfahrens durchschneidet oder durchstanzt das Verbindungselement die Bauteile und in Schritt d) wird der Schaft an seiner kopfabgewandten Seite am Gegenlager radial aufgeweitet, insbesondere umbördelt.

Gemäß einer weiteren bevorzugten Verfahrensalternative ist das Verbindungselement ein Vollstanzniet, wobei in Schritt c) die Bauteile und das Gegenlager durchstanzt werden und in Schritt d) das Gegenlager derart verprägt wird, dass Material des Gegenlagers in eine umfänglich angeordnete Nut am Schaft des Vollstanzniets verdrängt wird, sodass eine form- und/oder kraftschlüssige Verbindung zwischen Gegenlager und Schaft entsteht.

Gemäß einer weiteren bevorzugten Ausführungsform des erfindungsgemäßen Verfahrens ist das Verbindungselement ein Bolzen mit spitz zulaufendem Schaft. Das Gegenlager ist vorzugsweise eine geschlossene Scheibe oder eine Scheibe mit Loch, das einen Durchmesser aufweist, der geringer ist als der Durchmesser des Schafts des Verbindungselements. In weiterer Ausgestaltung von Schritt c) des obigen Verfahrens wird der Bolzen mit einer Geschwindigkeit von mindestens 5 m/s, vorzugsweise mindestens 10 m/sgesetzt. Dabei werden die Bauteile und das Gegenlager derart durchdrungen, dass während des Setzens der Schaft des Bolzens im Gegenlager fixiert wird.

### 4. Beschreibung, der begleitenden Zeichnungen

Die bevorzugten Ausführungsformen vorliegender Erfindung werden unter Bezugnahme auf die begleitende Zeichnung näher erläutert. Es zeigen:
- Fig. 1: eine schematische Explosionsdarstellung der Einzelteile der erfindungsgemäßen Verbindung und Vorrichtung zum Herstellen dieser Verbindung gemäß einer ersten Ausführungsform,
- Fig. 2: die Verbindung gemäß der ersten bevorzugten Ausführungsform,
- Fig. 3: eine schematische Darstellung einer bevorzugten Ausgangsposition zum Herstellen der Erfindung,
- Fig. 4: eine schematische Darstellung einer weiteren bevorzugten Ausführungsform der Erfindung sowie der zu deren Herstellung verwendeten Vorrichtung
- Fig. 5: eine schematische Darstellung einer weiteren bevorzugten Ausführungsform der Erfindung sowie der zu ihrer Herstellung genutzten Vorrichtung und
- Fig. 6: ein Flussdiagramm zur Illustration einer Ausführungsform des erfindungsgemäßen Verfahrens.

### 5. Detaillierte Beschreibung bevorzugter Ausführungsformen vorliegender Erfindung

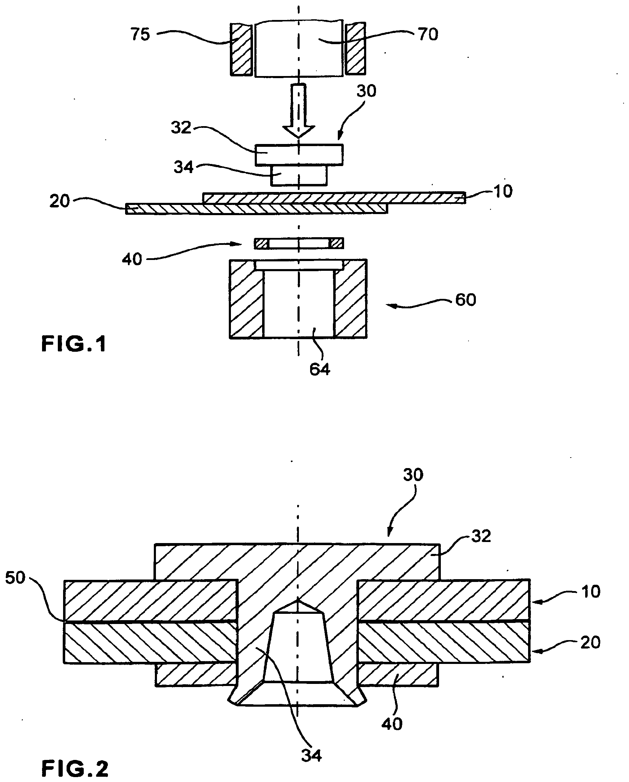

Vorliegende Erfindung umfasst eine Verbindung von mindestens zwei Bauteilen 10; 110, 20, wie sie gemäß unterschiedlicher Ausführungsformen in den Figuren 2, 4 und 5 dargestellt ist. Mindestens ein Bauteil 10, 110 20 besteht aus verstärktem Kunststoff, während bevorzugt mindestens zwei Bauteile 10, 20 aus verstärktem Kunststoff miteinander verbunden sind. Die Gruppe der verstärkten Kunststoffe umfassen Kunststoffe mit einer Festigkeit von mindestens 300 MPa, bevorzugt von mindestens 600 MPa. Zu diesen Kunststoffen zählen bevorzugt glasfaser-, kohlefaser-, gewebe- und mattenverstärkte Kunststoffe, wie CFK, um nur ein Beispiel zu nennen.

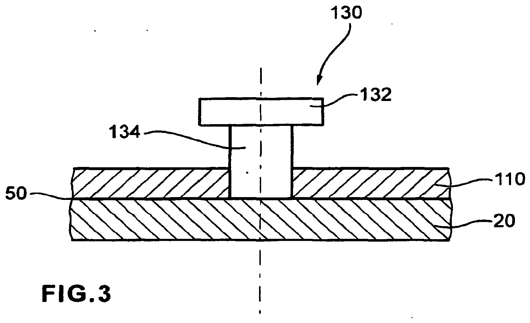

Es ist ebenfalls bevorzugt, dass das erste Bauteil 10, 110 aus hochfestem Stahl oder einem anderen Material, wie beispielsweise Edelstahl, als das zweite Bauteil 20 besteht, das aus verstärktem Kunststoff hergestellt ist. Gemäß der in Figur 3 gezeigten bevorzugten Ausführungsform ist zudem das erste Bauteil 110 vorgelocht, wenn es beispielsweise aus ultrahochfestem Stahl mit einer Festigkeit von mindestens 800 MPa hergestellt ist.

Bestehen die Bauteile 10, 20 aus verstärktem Kunststoff, sind sie gemäß einer weiteren Ausführungsform vorliegender Erfindung nicht vorgelocht, um einen Schaft 34; 134; 234 eines selbstlochenden, vorzugsweise an seiner Außenseite gewindelosen, Verbindungselements 30; 130; 230 aufzunehmen. Das selbstlochende Verbindungselement 30; 31; 230 umfasst zudem einen Kopf 32; 132; 232, um sich in der Verbindung am ersten Bauteil 10; 110; 210 abzustützen oder an diesem anzuliegen. Als selbstlochendes, vorzugsweise an der Außenseite gewindeloses, Verbindungselement 30; 130; 230 werden bevorzugt die in den Figuren 2, 4 und 5 gezeigten Konstruktionen in den Verbindungen genutzt.

Gemäß Figur 2 umfasst das Verbindungselement 30 in der dargestellten Verbindung einen sich durch die Bauteile 10, 20 erstreckenden Schaft 34, der in seiner axialen Richtung zumindest teilweise hohl ist. Zudem ist an der vom Kopf 32 abgewandten Stirnseite des Schafts 34 eine umfänglich angeordnete Schneidkante (nicht gezeigt) vorgesehen. Das Verbindungselement 30 der Figur 1 ist detailliert in EP 2 039 947 und US 2009/070983 beschrieben, die hiermit durch Bezugnahme vollständig aufgenommen sind. Das Verbindungselement 30 besteht zudem vorzugsweise aus einem korrosionsbeständigen Material, das nur vernachlässigbar oder gar nicht mit dem verstärkten Kunststoff wechselwirkt. Wird das Verbindungselement 30 in Bauteilen 10, 20 aus CFK eingesetzt, besteht es gemäß einer bevorzugten Ausführungsform vorliegender Erfindung aus Edelstahl.

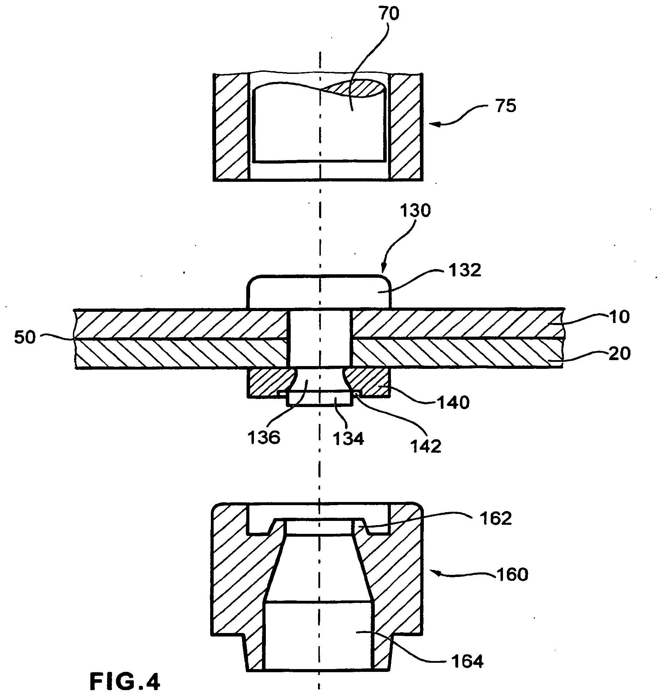

Ein Vollstanzniet 130 gemäß Figur 4 stellt eine weitere bevorzugte Ausführungsform des Verbindungselements der erfindungsgemäßen Verbindung dar. Der Vollstanzniet 130 umfasst einen am ersten Bauteil 10 anliegenden Kopf 132. Mit dem Kopf 132 ist ein Schaft 134 verbunden, der sich nach Herstellen der Verbindung vollständig durch die bevorzugt nicht vorgelochten Bauteile 10, 20 erstreckt. Benachbart zur vom Kopfende 32 abgewandten Stirnseite des Schafts 134 ist am Schaft 134 eine umfänglich umlaufende vorgeformte Nut 136 angeordnet. Die Nut 136 nimmt beim Verbinden der Bauteile 10, 20 von einem scheibenförmigen Gegenlager 140 verdrängtes Material auf. Das Material wird während eines Verprägens des Gegenlagers 140 in die Nut 136 verdrängt, sodass sich eine form- und/oder kraftschlüssige Verbindung zwischen Schaft 134 und Gegenlager 140 ausbildet. Zu diesem Zweck besteht das Gegenlager 140 bevorzugt aus einem duktilen Metall, wie Aluminium, Stahl, Edelstahl oder Titan. Der Vollstanzniet besteht vorzugsweise aus gehärtetem Stahl, Edelstahl oder Titan.?

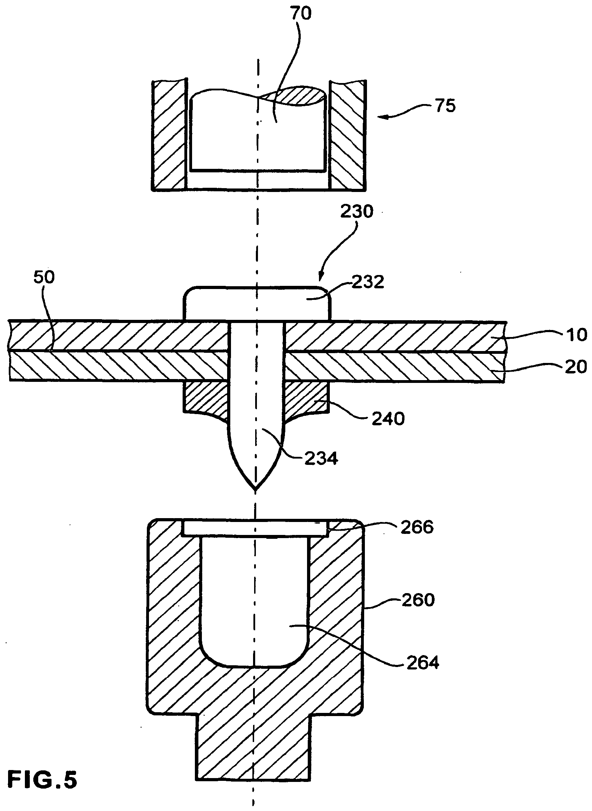

Gemäß einer dritten bevorzugten Ausführungsform, die in Figur 5 dargestellt ist, umfasst die Verbindung der Bauteile 10, 20 aus verstärktem Kunststoff einen Bolzen 230 als Verbindungselement. Der Bolzen 230 weist einen Kopf 332 auf, der mit einem spitz zulaufenden Schaft 234 verbunden ist. Der Bolzen 230 wird ebenfalls bevorzugt in nicht-vorgelochte Bauteile 10, 20 gefügt, sodass sein Schaft 234 in der Verbindung die Bauteile 10, 20 vollständig durchläuft. Konstruktive Details des Bolzens 230 sind in EP 1 926 918 oder WO 2008/125 312 oder WO 2009/010 165 näher erläutert, die hiermit durch Bezugnahme vollständig aufgenommen sind.

Das selbstlochende Verbindungselement 30; 130; 230 ist in der Verbindung mit dem bereits oben erwähnten scheibenförmigen Gegenlager 40; 140; 240 verbunden. Das Gegenlager 40; 140; 240 besteht aus derart festem Material, dass ein ausreichendes Fixieren des Schafts 34; 134; 234 am Gegenlager in der Verbindung gewährleistet ist. Ein passendes Material ist in der Ausführungsform der Figuren 2, 4 und 5 unter anderem ein duktiles Metall, wie Aluminium, Stahl, Titan oder Edelstahl. In der Ausführungsform der Figur 4 ist das Material derart gewählt, dass ein Verprägen und somit Verformen des Gegenlagers 140 stattfinden kann. Daher besteht auch hier das Gegenlager 140 vorzugsweise aus Aluminium, Stahl, Titan oder Edelstahl oder Materialien, die ein ähnliches Klemmmoment aufbringen.

In der Ausführungsform der Figuren 4 und 5 wird bevorzugt ein geschlossenes Gegenlager 140; 240 genutzt, d. h. ein Gegenlager, das kein mittiges Loch aufweist. Es ist ebenfalls bevorzugt, ein vorgelochtes Gegenlager 140, 240 zu verwenden. In der Ausführungsform der Figur 5 muss das Material des Gegenlagers 240 derart gewählt sein, dass nach dem Fügen des Bolzens 230 eine ausreichende mechanische Radialspannung am Schaft 234 das Gegenlager 240 fixiert. Daher besteht das Gegenlager 240 vorzugsweise aus Aluminium, Stahl, Titan oder Edelstahl oder Materialien, die ein ähnliches Klemmmoment aufbringen.

Wie man anhand der Verbindungen in den Figuren 2, 4 und 5 erkennen kann, ist das Gegenlager 40; 140; 240 in seiner äußeren Form, Größe und flächigen Ausdehnung an die

Form und Größe des Kopfs 32; 132; 232 angepasst. Zudem ist das Gegenlager 40, 140; 240 bevorzugt gegenüber dem Kopf 32; 132; 232 angeordnet, um eine vorteilhafte mechanische Spannungsverteilung in den Bauteilen 10, 20; 110; 120 der Verbindung zu erzielen. Des Weiteren realisiert das Gegenlager 40; 140; 240 vorzugsweise die Funktion eines Schließkopfes, der aus Stanznietverbindungen in Metallen bekannt ist. Wird bei herkömmlichen Stanznietverbindungen der Schließkopf nur durch den umgeformten Nietschaft gebildet, liefert das hier genutzte Gegenlager 40; 140; 240 einen flächenmäßig größeren Schließkopf, der am zweiten Bauteil 20 anliegt. Auf diese Weise wird die Festigkeit der hergestellten Verbindung gesteigert.

Gemäß einer weiteren Ausführungsform der erfindungsgemäßen Verbindung wird als Gegenlager 40; 140; 240 eine Tellerfeder eingesetzt. Beim Herstellen der Verbindung wird die als Gegenlager 40; 140; 240 genutzte Tellerfeder (nicht gezeigt) durch die Relativbewegung von Stempel 70 und Matrize 60; 160; 260 aufeinander zu gegen das zweite Bauteil 20 vorgespannt. In dieser Position und mit dieser mechanisch vorspannenden Auslenkung wird dann das Gegenlager 40; 140; 240 am Schaft 34; 134, 234 fixiert. Die Tellerfeder als Gegenlager 40; 140; 240 bringt somit eine die Verbindung unterstützende mechanische Spannungskomponente ein, die die Bauteile 10; 110, 20 zwischen Kopf 32; 132; 232 und Gegenlager 40; 140; 240 komprimiert.

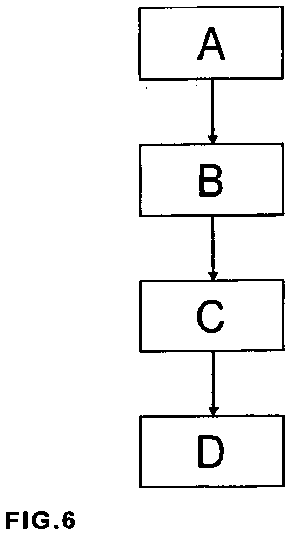

Zum Herstellen der Verbindung gemäß der Ausführungsform in Figur 2 werden zwei nicht-vorgelochte Bauteile 10, 20 übereinander angeordnet (Schritt A in Figur 6). Es ist ebenfalls bevorzugt, ein vorgelochtes Bauteil 10 und ein nicht-vorgelochtes Bauteil 20 zu verwenden. Gemäß dieser Ausführungsform bestehen die Bauteile 10, 20 aus kohlefaserverstärktem Kunststoff (CFK).

Nach dem Anordnen (Schritt A) werden die beiden Bauteile 10, 20 gegen das scheibenförmige Gegenlager 40 vorgespannt (Schritt B). Zu diesem Zweck ist das Gegenlager 40 auf einer Matrize 60 mit einem offenen inneren Kanal 64 gelagert (vgl. Figur 1). Die Bauteile 10, 20 werden durch einen Niederhalter 75 am Setzstempel 70 oder durch eine separate Vorspanneinrichtung (nicht gezeigt) vorgespannt.

Nach dem Anordnen (Schritt A) und Vorspannen (Schritt B) bewegt sich der Setzstempel 70 in Richtung der Bauteile 10, 20 (siehe Pfeil in Figur 1) und setzt das Verbindungselement 30 (Schritt C). Bei diesem Setzvorgang schneidet die Schneidkante (nicht gezeigt) an der kopfabgewandten Stirnseite des Schafts 34 Löcher in die Bauteile 10, 20, sodass der Schaft 34 die Bauteile 10, 20 vollständig durchläuft. Die aus den Bauteilen 10, 20 ausgeschnittenen oder ausstanzten Butzen fallen in den Kanal 64 der Matrize 60 und werden über diesen abtransportiert.

Das Gegenlager 40 weist vorzugsweise eine mittige Öffnung auf, die vor dem Setzen (Schritt C) mittig unterhalb des Schafts 34 angeordnet ist. Der Durchmesser der Öffnung ist kleiner als der Durchmesser der Schneidkante am Schaft 34. Aufgrund dieser Geometrie wird während des Setzens (Schritt C) ein Ring aus dem Gegenlager 40 ausgeschnitten, um die mittige Öffnung des Gegenlagers 40 an den Schaftumfang anzupassen. Es ist ebenfalls bevorzugt, das Gegenlager 40 ohne oder mit passend zum Schaft 34 ausgebildetem Loch vorzusehen.

Ist der Setzvorgang beendet, liegt der Kopf 32 am Bauteil 10 an und wird vom Setzstempel 70 gehalten. Nun bewegt sich durch den Kanal 64 ein Gegenstempel (nicht gezeigt), der den teilweise hohlen Schaft 34 radial auswärts aufweitet, vorzugsweise umbördelt. Auf diese Weise wird der Schaft 34 am Gegenlager 40 fixiert (Schritt D) und die Verbindung der Figur 2 hergestellt.

Gemäß der in Figur 4 gezeigten Ausführungsform wird der Vollstanzniet 130 in die beiden Bauteile 10, 20 gesetzt und mit dem Gegenlager 140 verbunden. Vor dem Anordnen (Schritt A) und dem Vorspannen (Schritt B) wird das Gegenlager 140 teilweise in der Matrize 160 positioniert. Es liegt auf einem ringförmigen Vorsprung 162 auf, der radial außen durch Vertiefungen und radial innen durch den inneren Kanal 164 der Matrize 160 begrenzt ist (vgl. seitliche Schnittansicht in Figur 4). Das Gegenlager 140 ist so dick, dass es in Richtung auf das Bauteil 20 über die Matrize 160 hinausragt. Aufgrund dieser Anordnung ist ein Verrutschen des Gegenlagers 140 nach dem Positionieren in der Matrize 160 verhindert. Nachdem das Gegenlager 140 positioniert worden ist, werden die Bauteile 10, 20 übereinander auf der Matrize 160 mit Gegenlager 140 angeordnet (Schritt A).

Nach dem Anordnen (Schritt A) und Vorspannen (Schritt B) mit dem Niederhalter 75 oder einer nicht gezeigten Vorspannvorrichtung wird der Vollstanzniet 130 durch die Bauteile 10,20 gesetzt (Schritt C). Vorzugsweise sind die Bauteile 10,20 und das Gegenlager 140 nicht vorgelocht, sodass während des Setzens (Schritt C) die Bauteile 10, 20 und das Gegenlager 140 durchstanzt werden. Dadurch entstehen drei Butzen, die über den inneren Kanal 164 in der Matrize 160 abgeführt werden.

Des Weiteren wird durch die Bewegung des Setzstempels 70 während des Setzens (Schritt C) das Gegenlager 140 gegen den ringförmigen Vorsprung 162 gedrückt und verprägt. Beim Verprägen dringt der ringförmige Vorsprung 162 in das Gegenlager 140 ein und verdrängt Material des Gegenlagers 140 in die Nut 136. Basierend auf dieser Materialverdrängung entsteht eine form- und/oder kraftschlüssige Verbindung zwischen Gegenlager 40 und Schaft 134. Auf diese Weise wird das Gegenlager 40 am Verbindungselement 130 fixiert (Schritt D).

In der dritten Ausführungsform gemäß Figur 5 wird das Gegenlager 240 auf der Matrize 260 positioniert. Die Matrize 260 umfasst zu diesem Zweck eine umlaufende Vertiefung 266 oberhalb eines Hohlraums 264. Der Hohlraum 264 dient der Aufnahme des Schafts 234 des Bolzens 230 beim Setzen (Schritt C). (vgl. die seitliche Schnittansicht in Figur 5)

Nach dem Anordnen (Schritt A) und Vorspannen (Schritt B) der Bauteile 10, 20 (siehe oben) wird der Bolzen 230 mit einer Geschwindigkeit von mindestens 5 m/s, vorzugsweise mindestens 10 m/s, gesetzt.

Der Bolzen 230 wird mit Hilfe des Setzstempels 70 eingetrieben. Es ist bevorzugt, dass weder die Bauteile 10, 20 noch das Gegenlager 240 vorgelocht sind. Während des Setzens (Schritt C) durchbringt der Bolzen 230 die Bauteile 10, 20 und das Gegenlager 240. Bei diesem Setzvorgang stützt die Matrize 260 mit Gegenlager 240 die Bauteile 10, 20 entsprechend ab. In gleicher Weise wird gemäß einer weiteren Verfahrensalternative ein Gegenlager mit Loch eingesetzt.

Nach dem Setzen (Schritt C) wird der Schaft 234 im Gegenlager 240 durch radial nach innen gerichtete Druckspannungen gehalten, sodass bereits während des Setzens (Schritt C) der Schaft 234 im Gegenlager 240 fixiert wird (Schritt D).

Für die Unterstützung der Verbindung der Bauteile 10, 20 und 110, 20 ist es ebenfalls bevorzugt, zwischen den Bauteilen 10, 20 und 110, 20 eine Klebstoffschicht 50 vorzusehen.

Diese Klebstoffschicht 50 wird vor dem Anordnen der Bauteile 10, 20 und 110, 20 auf eines der Bauteile 10, 110, 20 aufgebracht. Auf diese Weise realisiert die Klebstoffschicht 50 ein Vorfixieren der Bauteile 10, 110, 20 bis zur vollständigen Aushärtung des Klebstoffs. Zudem trägt die Klebstoffschicht 50 in der jeweiligen Verbindung zur strukturellen Verstärkung der Verbindung bei. In einer im Kraftfahrzeug hergestellten Verbindung führt dies zu einer höheren Stabilität der Verbindung beispielsweise im Crashfall des Kraftfahrzeugs. Somit liegt dann in den Verbindungen gemäß den unterschiedlichen oben diskutierten Ausführungsformen vorliegender Erfindung zwischen den Bauteilen 10, 20 und 110, 20 eine Klebstoffschicht 50 vor.

## Patentansprüche

1. Verbindung bestehend aus mindestens zwei Bauteilen (10; 110, 20), die die folgenden Merkmale aufweist:
a. ein erstes Bauteil (10; 110) und ein zweites Bauteil (20), von denen zumindest das zweite Bauteil (20) aus verstärktem Kunststoff besteht und das zweite (20) oder das erste (10; 110) und zweite Bauteil (20) für einen Schaft (34; 134; 234) eines selbstlochenden Verbindungselements (30; 130; 230) nicht-vorgelochte Bauteile sind,
b. das selbstlochende Verbindungselement (30; 130; 230) mit einem Kopf (32; 132; 232) und dem Schaft (34; 134; 234), dessen Kopf (32; 132; 232) sich am ersten Bauteil (10; 110) abstützt und dessen Schaft (34; 134; 234) das erste (10; 110) und das zweite Bauteil (20) sowie ein scheibenförmiges Gegenlager (40; 140; 240) vollständig durchläuft, wobei
der Schaft (34; 134; 234) an dem scheibenförmigen Gegenlager (40; 140; 240) befestigt ist, so dass die mindestens zwei Bauteile (10; 110, 20) zwischen Kopf (32; 132; 232) und Gegenlager (40; 140; 240) fixiert sind.

2. Verbindung gemäß Anspruch 1, in der das zweite Bauteil (20) oder das erste (10; 110) und das zweite Bauteil (20) aus verstärktem Kunststoff mit einer Festigkeit über 300 MPa, vorzugsweise über 600 MPa, bestehen.

3. Verbindung gemäß Anspruch 1, in der das zweite Bauteil (20) oder das erste (10; 110) und das zweite Bauteil aus kohlefaserverstärktem Kunststoff (CFK) bestehen.

4. Verbindung gemäß einem der vorhergehenden Ansprüche, in der das scheibenförmige Gegenlager (40; 140; 240) eine Scheibe aus duktilem Material, vorzugsweise Stahl oder Aluminium, mit oder ohne Loch zur Aufnahme des Schafts (34; 134; 234) ist.

5. Verbindung gemäß Anspruch 4, in der das scheibenförmige Gegenlager (40; 140; 240) mit einer Fläche am zweiten Bauteil (20) anliegt, die in Form und flächiger Ausdehnung dem Kopf (32; 132; 232) des Verbindungselements (30; 130; 230) entspricht.

6. Verbindung gemäß Anspruch 1, in der das erste (10; 110) und zweite Bauteil (20) aus nicht-vorgelochtem kohlefaserverstärktem Kunststoff (CFK) bestehen und der Schaft (34) des Verbindungselements (30) in axialer Richtung zumindest teilweise hohl und am Gegenlager (40) radial auswärts bezogen auf die Längsachse des Schafts (34) aufgeweitet, insbesondere umbördelt, ist.

7. Verbindung gemäß Anspruch 1, in der das selbstlochende Verbindungselement (30; 130; 230)
a. einen zumindest teilweise hohlen Schaft (34) mit einer umfänglich angeordneten Schneidkante an der kopfabgewandten Stirnseite aufweist, oder
b. ein Vollstanzniet (130) ist oder
c. ein Bolzen (230) mit einem an der kopfabgewandten Stirnseite spitz zulaufendem Schaft (234) ist.

8. Verbindung gemäß Anspruch 1, die zwischen dem ersten Bauteil (10; 110) und dem zweiten Bauteil (20) eine Klebstoffschicht (50) aufweist.

9. Verfahren zum Verbinden von mindestens einem ersten Bauteil (10; 110) und einem zweiten nicht-vorgelochtem Bauteil (20), das aus verstärktem Kunststoff besteht, durch ein selbstlochendes Verbindungselement (30; 130; 230) mit einem Kopf (32; 132; 232) und einem Schaft (34; 134; 234), das die folgenden Schritte aufweist:
a. Anordnen (A) des ersten (10; 110) und zweiten Bauteils (20) übereinander,
b. Vorspannen (B) des ersten (10; 110) und zweiten Bauteils (20) gegen ein scheibenförmiges Gegenlager (40; 140; 240),
c. Setzen (C) des Verbindungselements (30; 130; 230) derart, dass der Schaft (34; 134; 234) das erste (10; 110) und zweite Bauteil (20) sowie das scheibenförmige Gegenlager (40; 140; 240) vollständig durchdringt, wobei das scheibenförmige Gegenlager (40; 140; 240) als Matrize wirkt, und
d. Fixieren (D) des Schafts (34; 134; 234) am Gegenlager (40; 140; 240), so dass das erste (10; 110) und zweite Bauteil (20) zwischen Kopf (32; 132; 232) des Verbindungselements (30; 130; 230) und Gegenlager (40; 140; 240) gehalten sind.

10. Verfahren gemäß Anspruch 9, bei dem das erste (10; 110) und zweite Bauteil (20) aus nicht-vorgelochtem kohlefaserverstärktem Kunststoff (CFK) bestehen und das Verbindungselement (30) einen zumindest teilweisen hohlen Schaft (34) mit einer umfänglich angeordneten Schneidkante an der kopfabgewandten Stirnseite aufweist, wobei in Schritt c. das Verbindungselement (30) die Bauteile (10; 20) durchschneidet oder durchstanzt und in Schritt D die kopfabgewandte Seite des Schafts (34) am Gegenlager (40) radial auswärts aufgeweitet, insbesondere umbördelt, wird.

11. Verfahren gemäß Anspruch 9, bei dem das Verbindungselement (130) ein Vollstanzniet ist, wobei
in Schritt c. die Bauteile (10; 20) und das Gegenlager (140) durchstanzt werden und
in Schritt d. das Gegenlager (140) derart verprägt wird, dass Material des Gegenlagers (140) in eine umfänglich angeordnete Nut (136) am Schaft (134) des Vollstanzniets (130) verdrängt wird, sodass eine form- und/oder kraftschlüssige Verbindung entsteht.

12. Verfahren gemäß Anspruch 9, bei dem das Verbindungselement (230) ein Bolzen mit spitz zulaufendem Schaft (234) und das Gegenlager (240) eine, vorzugsweise geschlossene, Scheibe ist, wobei
in Schritt C der Bolzen (230) mit einer Geschwindigkeit von mindestens 5 m/s, vorzugsweise mindestens 10 m/s, gesetzt wird und dabei die Bauteile (10, 20) und das Gegenlager (240) durchdringt, so dass
während des Setzens der Schaft (234) des Bolzens (230) im Gegenlager (240) fixiert wird.

13. Verfahren gemäß Anspruch 9 mit dem weiteren Schritt: Aufbringen einer Klebstoffschicht (50) zwischen dem ersten (10; 110) und zweiten Bauteil (20).

## Claims

1. A connection comprised of at least two components (10; 110, 20) that has the following features:
a. a first component (10; 110) and a second component (20), of which at least the second component (20) consists of reinforced plastic, and the second (20), or the first (10; 110) and the second component (20), are not pre-punched components for a shaft (34; 134; 234) of a self-piercing connection element (30; 130; 230),
b. the self-piercing connection element (30; 130; 230) with a head (32; 132; 232) and the shaft (34; 134; 234), the head (32; 132; 232) thereof being supported on the first component (10; 110), and the shaft (34; 134; 234) thereof completely passes through the first (10; 110) and the second component (20) as well as through a disc-shaped counter bearing (40; 140; 240), wherein
the shaft (34; 134; 234) is fastened to the disc-shaped counter bearing (40; 140; 240) so that the at least two components (10; 110, 20) are fixed between the head (32; 132; 232) and the counter bearing (40; 140; 240).

2. The connection according to claim 1, in which the second component (20), or the first (10; 110) and the second component (20), consist of reinforced plastic with a strength of more than 300 MPa, preferably more than 600 MPa.

3. The connection according to claim 1, in which the second component (20), or the first (10; 110) and the second component, consist of carbon fiber reinforced plastic (CRP).

4. The connection according to one of the preceding claims, in which the disc-shaped counter bearing (40; 140; 240) is a disc comprised of a ductile material, preferably steel or aluminum, with or without a hole for receiving the shaft (34; 134; 234).

5. The connection according to claim 4, in which the disc-shaped counter bearing (40; 140; 240) abuts with a surface on the second component (20) that corresponds in shape and areal extent to the head (32; 132; 232) of the connection element (30; 130; 230).

6. The connection according to claim 1, in which the first (10; 110) and the second component (20) consist of not pre-punched carbon fiber reinforced plastic (CRP) and the shaft (34) of the connection element (30) is in the axial direction at least partly hollow, and is widened, particularly crimped, at the counter bearing (40) radially outwards with respect to the longitudinal axis of the shaft (34).

7. The connection according to claim 1, in which the self-piercing connection element (30; 130; 230)
a. comprises a shaft (34) that is at least partly hollow, with a circumferentially disposed cutting edge at the face side facing away from the head, or
b. is a solid punch rivet (130), or
c. is a bolt (230) with a tapering shaft (234) on the face side facing away from the head.

8. The connection according to claim 1, which has an adhesive layer (50) between the first component (10; 110) and the second component (20).

9. A method for connecting at least one first component (10; 110) and one second component (20) that is not pre-punched and that consists of reinforced plastic, by a self-piercing connection element (30; 130; 230) with a head (32; 132; 232) and a shaft (34; 134; 234), that has the following steps:
a. placing (A) the first (10; 110) and the second component (20) over one another,
b. pretensioning (B) the first (10; 110) and second component (20) against a disc-shaped counter bearing (40; 140; 240),
c. setting (C) the connection element (30; 130; 230) so that the shaft (34; 134; 234) completely penetrates the first (10; 110) and second component (20) as well as the disc-shaped counter bearing (40; 140; 240), wherein the disc-shaped counter bearing (40; 140; 240) acts as a die, and
d. fixing (D) the shaft (34; 134; 234) to the counter bearing (40; 140; 240) so that the first (10; 110) and second component (20) are held between the head (32; 132; 232) of the connection element (30; 130; 230) and the counter bearing (40; 140; 240).

10. The method according to claim 9, in which the first (10; 110) and second component (20) consist of not pre-punched carbon fiber reinforced plastic (CRP), and the connection element (30) has a shaft (34), at least partly hollow, with a circumferentially disposed cutting edge at the face side facing away from the head, wherein in step c. the connection element (30) cuts through or punches through the components (10, 20), and in step d., the side of the shaft (34) facing away from the head is widened radially outward at the counter bearing (40), particularly flattened.

11. The method according to claim 9, in which the connection element (130) is a solid punch rivet, wherein
in step c. the components (10, 20) and the counter bearing (140) are punched through, and
in step d. the counter bearing (140) is embossed such that material of the counter bearing (140) is displaced into a circumferentially disposed groove (136) in the shaft (134) of the solid punch rivet (130) so that a form-locking and/or force-locking connection results.

12. The method according to claim 9, in which the connection element (230) is a bolt with a tapering shaft (234) and the counter bearing (240) is a preferably closed disc, wherein
in step c., the bolt (230) is set with a speed of at least 5 m/s, preferably at least 10 m/s, and penetrates the components (10, 20) and the counter bearing (240), so that
during the setting, the shaft (234) of the bolt (230) is fixed in the counter bearing (240).

13. The method according to claim 9, with the further step: applying an adhesive layer (50) between the first (10; 110) and the second component (20).

## Revendications

1. Liaison, composée d'au moins deux éléments (10; 110, 20), présentant les caractéristiques suivantes :
a. un premier élément (10 ; 110) et un deuxième élément (20), parmi lesquels au moins le deuxième élément (20) est composé d'un plastique renforcé et le deuxième (20) ou le premier (10 ; 110) et le deuxième élément (20) sont des éléments non pré-perforés pour une tige (34 ; 134 ; 234) d'un élément de liaison auto-perforant (30 ; 130 ; 230),
b. l'élément de liaison auto-perforant (30 ; 130 ; 230) avec une tête (32 ; 132 ; 232) et la tige (34 ; 134 ; 234), dont la tête (32 ; 132 ; 232) s'appuie sur le premier élément (10 ; 110) et dont la tige (34 ; 134 ; 234) traverse complètement le premier (10 ; 110) et le deuxième élément (20) ainsi qu'une butée (40 ; 140 ; 240) en forme de disque,
la tige (34 ; 134 ; 234) étant fixée sur la butée (40 ; 140 ; 240) en forme de disque de telle façon que les au moins deux éléments (10 ; 110, 20) sont immobilisés entre la tête (32 ; 132 ; 232) et la butée (40 ; 140 ; 240).

2. Liaison selon la revendication 1, dans laquelle le deuxième élément (20) ou le premier (10 ; 110) et le deuxième élément (20) sont composés d'un plastique renforcé ayant une résistance supérieure à 300 MPa, de préférence supérieure à 600 MPa.

3. Liaison selon la revendication 1, dans laquelle le deuxième élément (20) ou le premier (10 ; 110) et le deuxième élément sont composés d'un plastique renforcé de fibres de carbone (PRFC).

4. Liaison selon l'une des revendications précédentes, dans laquelle la butée (40 ; 140 ; 240) en forme de disque est un disque en matériau ductile, de préférence de l'acier ou de l'aluminium, avec ou sans trou pour la réception de la tige (34 ; 134 ; 234).

5. Liaison selon la revendication 4, dans laquelle la butée (40 ; 140 ; 240) en forme de disque est adjacente à une surface sur le deuxième élément (20) qui, par sa forme et son étendue à plat, correspond à la tête (32 ; 132 ; 232) de l'élément de liaison (30 ; 130 ; 230).

6. Liaison selon la revendication 1, dans laquelle le premier (10; 110) et le deuxième élément (20) sont composés d'un plastique renforcé de fibres de carbone (PRFC) non pré-perforé, et la tige (34) de l'élément de liaison (30) est au moins partiellement creuse dans la direction axiale et est évasée, en particulier rabattue, vers l'extérieur radialement sur la butée (40) par rapport à l'axe longitudinal de la tige (34).

7. Liaison selon la revendication 1, dans laquelle l'élément de liaison (30 ; 130 ; 230) auto-perforant
a. présente une tige (34) au moins partiellement creuse avec une arête de coupe disposée de manière périphérique sur le côté frontal éloigné de la tête, ou
b. est un rivet auto-poinçonnant plein (130) ou
c. est un goujon (230) avec une tige (234) se terminant en pointe sur le côté frontal éloigné de la tête.

8. Liaison selon la revendication 1, qui présente une couche de colle (50) entre le premier élément (10 ; 110) et le deuxième élément (20).

9. Procédé pour la liaison d'au moins un premier élément (10; 110) et d'un deuxième élément (20) non pré-perforé, qui est composé de plastique renforcé, par un élément de liaison (30 ; 130 ; 230) auto-perforant avec une tête (32 ; 132 ; 232) et une tige (34 ; 134 ; 234), qui présente les étapes suivantes :
a. agencement (A) du premier (10 ; 110) et du deuxième élément (20) l'un au-dessus de l'autre,
b. pré-tension (B) du premier (10 ; 110) et du deuxième élément (20) contre une butée (40 ; 140 ; 240) en forme de disque,
c. pose (C) de l'élément de liaison (30 ; 130 ; 230) de telle sorte que la tige (34 ; 134 ; 234) pénètre complètement le premier (10 ; 110) et le deuxième élément (20) ainsi que la butée (40 ; 140 ; 240) en forme de disque, la butée (40 ; 140 ; 240) en forme de disque agissant en tant que matrice, et
d. immobilisation (D) de la tige (34 ; 134 ; 234) sur la butée (40 ; 140 ; 240) de telle sorte que le premier (10 ; 110) et le deuxième élément (20) sont retenus entre la tête (32 ; 132 ; 232) de l'élément de liaison (30 ; 130 ; 230) et la butée (40 ; 140 ; 240).

10. Procédé selon la revendication 9, dans lequel le premier (10; 110) et le deuxième élément (20) sont composés de plastique renforcé de fibres de carbone (PRFC) non pré-perforé et l'élément de liaison (30) présente une tige (34) au moins partiellement creuse avec une arête de coupe disposée de manière périphérique sur le côté frontal éloigné de la tête, l'élément de liaison (30) découpant ou poinçonnant les éléments (10 ; 20) dans l'étape c. et, dans l'étape D, le côté de la tige (34) éloigné de la tête étant évasé, en particulier rabattu, sur la butée (40) vers l'extérieur radialement.

11. Procédé selon la revendication 9, dans lequel l'élément de liaison (30) est un rivet auto-poinçonnant plein,
les éléments (10 ; 20) et la butée (140) étant poinçonnés dans l'étape c., et
la butée (140) étant dans l'étape d. estampée de telle sorte que le matériau de la butée (140) est refoulé dans une rainure (136), disposée de manière périphérique, sur la tige (34) du rivet auto-poinçonnant plein (130) de telle qu'il est réalisé une liaison par forme et/ou par force.

12. Procédé selon la revendication 9, dans lequel l'élément de liaison (230) est un goujon avec une tige (234) se terminant en pointe et dans lequel la butée (240) est un disque, de préférence fermé,
le goujon (230) étant, dans l'étape C, placé avec une vitesse d'au moins 5 m/s, de préférence d'au moins 10 m/s, et pénétrant ce faisant les éléments (10 ; 20) et la butée (240) de telle sorte que,
pendant la pose, la tige (234) du goujon (230) est immobilisée dans la butée (240).

13. Procédé selon la revendication 9, avec l'étape complémentaire suivante: mise en place d'une couche de colle (50) entre le premier (10 ; 110) et le deuxième élément (20).
